# EUROPEAN PATENT SPECIFICATION

(11) **EP 0 708 283 B1**
(45) Date of publication and mention of the grant of the patent: **24.07.2002**
(21) Application number: 95307443.2
(22) Date of filing: 19.10.1995
(51) Int. Cl.: F16K 15/04

(54) **Ball check valve**
Kugelrückschlagventil
Clapet de retenue à bille

(30) Priority: 19.10.1994 GB 9421070
(43) Date of publication of application: 24.04.1996
(73) Proprietor: Clarke, Peter, Southwell, Nottingham NG25 0TX (GB); Clarke, Rene, Southwell, Nottingham NG25 0TX (GB); Clarke, Brendon, Southwell, Nottingham NG25 0TX (GB); Clarke, Carl, Southwell, Nottingham NG25 0TX (GB); Clarke, Cheryl, Southwell, Nottingham NG25 0TX (GB); Clarke, Edit, Southwell, Nottingham NG25 0TX (GB)
(72) Inventor: Clarke, Brendon Alexander, West Bridgford Nottingham NG2 5DL (GB)
(74) Representative: Dealtry, Brian

(56) References cited:
- DE-A- 1 750 711
- DE-A- 3 741 548
- DE-B- 1 057 840
- FR-A- 2 538 873
- US-A- 1 721 353
- US-A- 2 278 715

## Description

The present invention relates to a ball valve. The ball valve of the present invention has particular, but not exclusive, application to the field of sewage handling.

Problems arise when conventional ball valves are used in sewage handling, for example, on the inlet and outlet of a sewage pump, due to the presence of objects in sewage which lodge themselves within the valve and prevent it from operating correctly. The efficiency of the associated pump is often impaired. Typical objects include toothbrushes, disposable razors and rags.

Throughout the specification, the term "fluid" is to be understood not only in its conventional sense but also as including both the liquid medium and the suspended solid material components of sewage.

Patent application number DE-A-1750711 discloses a check valve having a closing body that moves between a seat and a stop to allow fluid to flow through the valve to a valve outlet. US patent number 1,721,353 discloses a check valve comprising a casing having a seat, a ball valve and means for suspending the ball so that it may swing freely laterally toward and away from the seat, the means including a rod on which the ball is slidably mounted.

The present invention provides a ball valve in accordance with claim 1 of the appended claims. A ball valve according to the invention comprises:
a first body portion having an inlet, an outlet and an aperture;
a second body portion closing off the aperture of the first body portion, said second body portion being detachable from the first body portion, the first and second body portions together defining a chamber;
a valve seat in the first body portion dividing the chamber into inlet and outlet regions;
a ball guide disposed in the outlet region;
a ball movable between a first position in which it sits on the valve seat and blocks fluid flow between the outlet and the inlet, and a second position in which the ball abuts against the ball guide and fluid can flow between the inlet and the outlet,
characterised in that:
the ball guide forms an integral part of the second body portion;
and in that
due to the size of the aperture and the integral configuration of the ball guide and the second body portion, on removal of the second body portion, immediate access is provided to the valve seat.

Preferably, the aperture is sized to permit the removal and replacement of the valve seat.

By the provision of the above features, the present invention provides a ball valve which is readily maintainable in that access is afforded to the interior of the ball valve via the aperture in the first body portion without the need to disconnect its inlet and outlet from the other elements of the sewage handling circuit. In this way, any blockages lodged in the valve such as toothbrushes and disposable razors can be readily removed and/or the valve seat can be easily replaced, after simply detaching the second body portion from the first body portion.

An exemplary embodiment of the invention is hereinafter described with reference to the accompanying drawings, in which:
Figure 1 shows an exploded, cross-sectional view of a ball valve in accordance with the present invention;
Figure 2(a) shows the ball valve of Figure 1 from a similar view, but in unexploded form;
Figure 2(b) shows the ball valve of Figure 2(a) when viewed from above;
Figure 3 shows a first body portion of the ball valve of Figure 1 in isolation;
Figures 4(a), 4(b) show sections A,A and sections B,B of Figure 3;
Figure 5(a) shows an annular stainless steel plate for securing a valve seating in situ;
Figure 5(b) shows a valve seating;
Figure 6(a) shows a cross-section of a second body portion of the ball valve in Figure 1 in isolation;
Figure 6(b) shows a view from below Figure 6(a);
Figure 7(a) shows the second body portion when the valve is in use and viewed from the outlet; and
Figure 7(b) shows a view of Figure 7(a) in plan.

The reference numerals used in describing the above drawings are followed by ¹ in order to distinguish them from the other numerals in the drawings which represent dimensions in mm's.

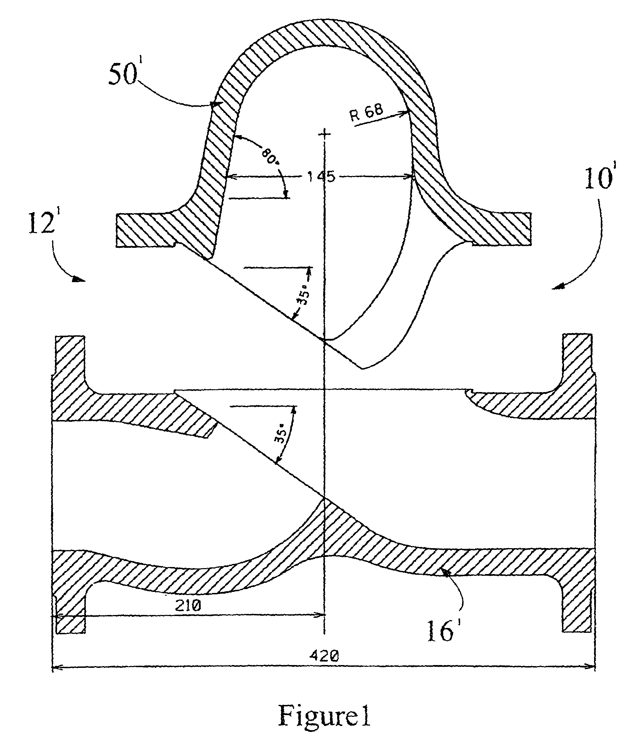

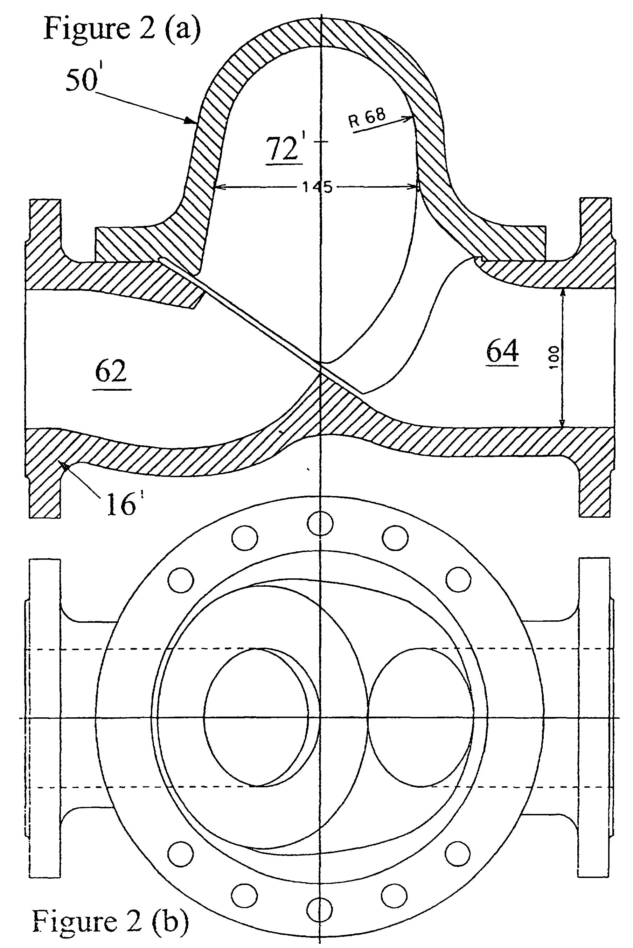

Referring to Figure 1, the illustrated ball valve of the present invention, which is designated generally by 10¹, is suitable for use in sewage handling, for example, on the inlet and outlet of a ram or diaphragm pump. It comprises a housing 12¹ made up of two cooperating castings a first body portion or main body portion 16¹ and a second body portion or dome 50¹. Figure 2(a) shows the two castings attached to each other.

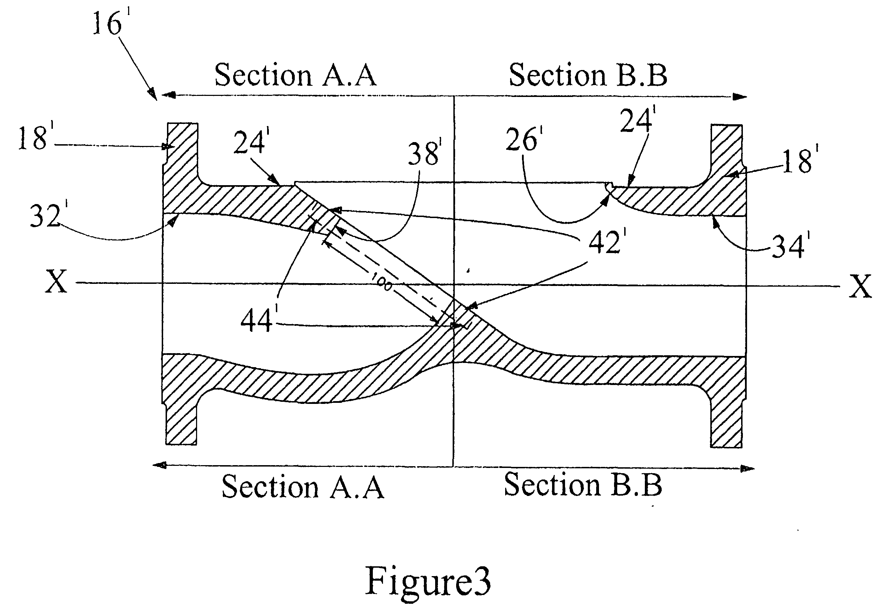

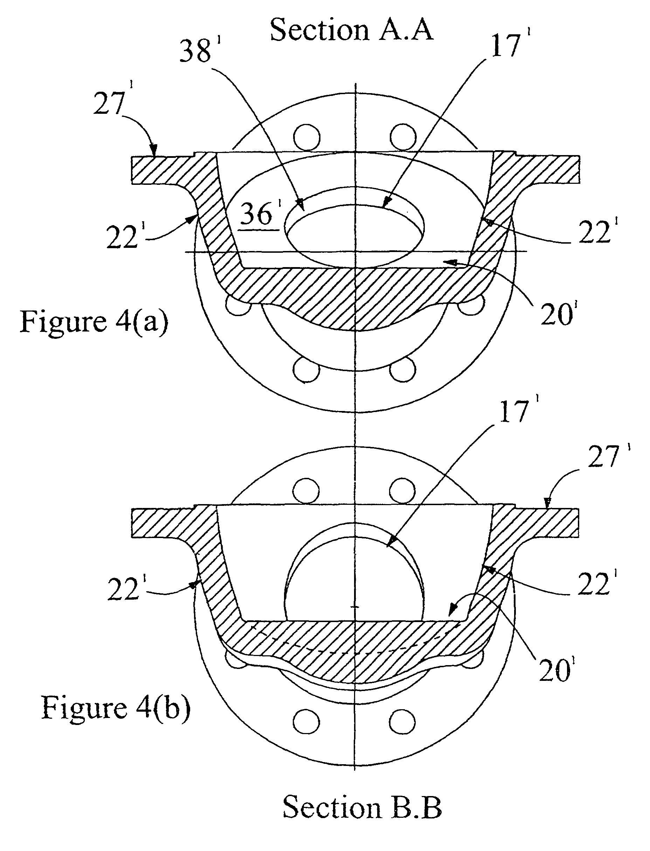

Referring to Figures 3, 4(a) and 4(b), the main body portion 16¹ comprises a generally tubular portion 17¹ having a central longitudinal axis X,X and which provides at opposite ends thereof an inlet 32¹ and an outlet 34¹. As is best shown in Figures 4(a) and 4(b), the tubular portion comprises a floor 20¹, from which two diverging walls 22¹ upstand, and a ceiling portion 24¹. The ceiling portion 24¹, midway therealong, includes an aperture 26¹ which provides communication with or access to the interior of the main body portion 16^{1.} Surrounding the aperture 26¹, there is also provided an annular flange 27¹ which provides the means by which the main body portion 16¹ is attached to the dome 50¹. The main body portion 16¹ also includes annular flanges 18¹ which surround the inlet 32¹ and outlet 34¹ and provide the means by which the ball valve is connected to other elements of the sewage handling system.

Inside the main body portion 16¹, there is also provided a planar wall 36¹ which extends at an angle to the central longitudinal axis X,X of the main body portion 16¹ and connects the ceiling portion 24¹ to the floor 20¹. From Figure 1, the angle in the described embodiment can be seen to be 35°. The wall 36¹ includes a circular orifice 38¹. The dotted line labelled S in Figure 3 shows the intended position of the valve seat assembly.

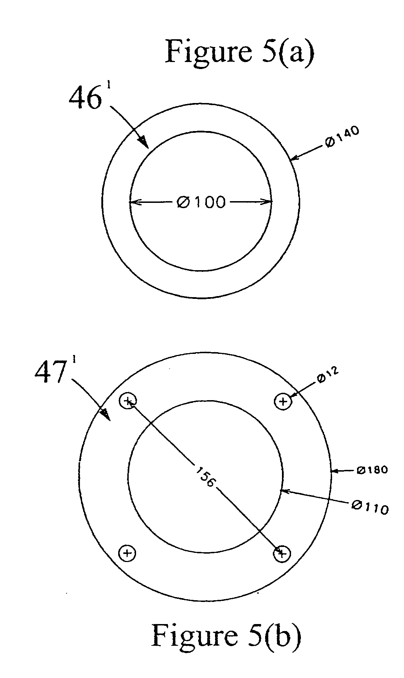

In order to fit valve seat assembly, a circular recess 44¹ is formed in the wall surrounding the circular orifice 38¹ by removing the metal 42¹ thereby revealing surface 44¹ which is then provided with threaded holes. Clearly, the aperture 26₁ must be of sufficient size to permit the metal 42₁ to be readily machined. A plastic or rubber annular valve seat or seating 46¹ as shown in Figure 5(a) is placed in the recess 40¹ against the surface 44¹ and is affixed thereto using a stainless steel, annular plate 47¹ as shown in Figure 5(b). The plate 47¹ is secured to the surface 44¹ using screws which cooperate with the threaded holes in the surface 44¹, thereby sandwiching the seating 46¹ in position.

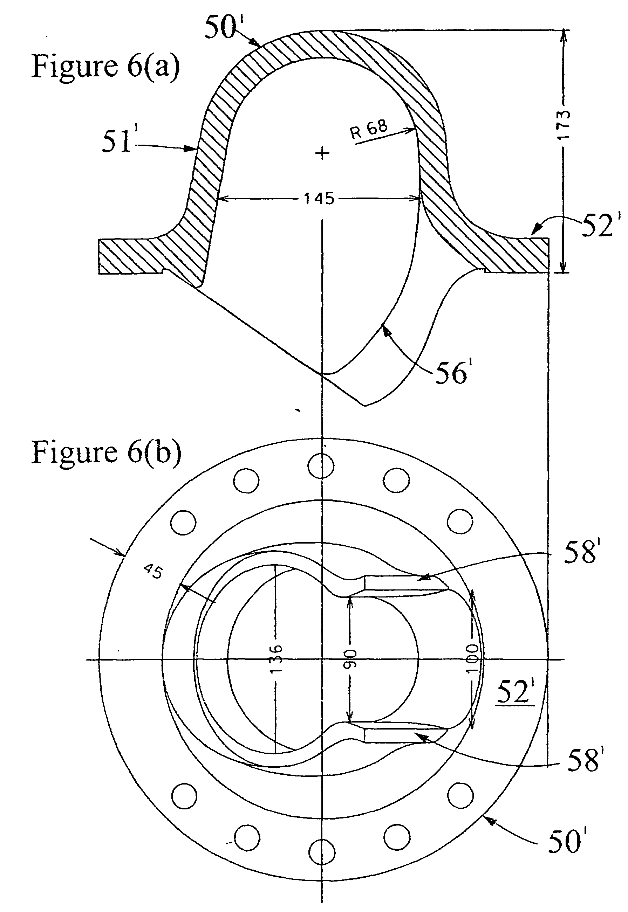

Referring to Figure 6(a) and 6(b), the second body portion or dome 50¹ comprises a dome portion 51¹ having an annular flange 52¹ surrounding its open end. The flange 52¹ provides the means by which the dome 50¹ is secured to the main body portion 16¹. The dome 50¹ also comprises a ball guide 56¹ integrally formed therewith which includes a pair of spaced abutments 58¹. The dimensions of the ball guide 56¹ are selected such that when the dome is attached to the main body portion 16¹, i.e. by sitting the dome on the ceiling portion 24¹ such that it closes off the aperture 26¹ and bolting the flanges 27¹ and 52¹ together, the end of the ball guide 56¹ marries with the main body portion 16¹ in close relation, such that the gap between the wall 36¹ and the end of the ball guide 56¹ is typically in the order of 1mm.

In this assembled condition and referring to Figure 2(a), the ball valve can be thought of as defining a chamber comprising an inlet region 62¹ on the side of the valve seat 46¹ adjacent the inlet 32¹ and an outlet region 64¹ on the side of the valve seat 46¹ adjacent the outlet 34¹, including the volume enclosed by the dome portion 51¹. In operation, a ball 70¹ sits in the region enclosed by the ball guide 56¹, the valve seat 46¹ and the dome 50¹. This region is hereinafter referred to as the ball-confinement region and is designated 72¹. It will be noted that the ball 70¹ can be removed from the ball-confinement region 72¹ via the aperture 26¹.

In use, in-line in a sewage handling system, for example, on the inlet of a ram or diaphragm pump, the ball valve 10¹ has two modes of operation.

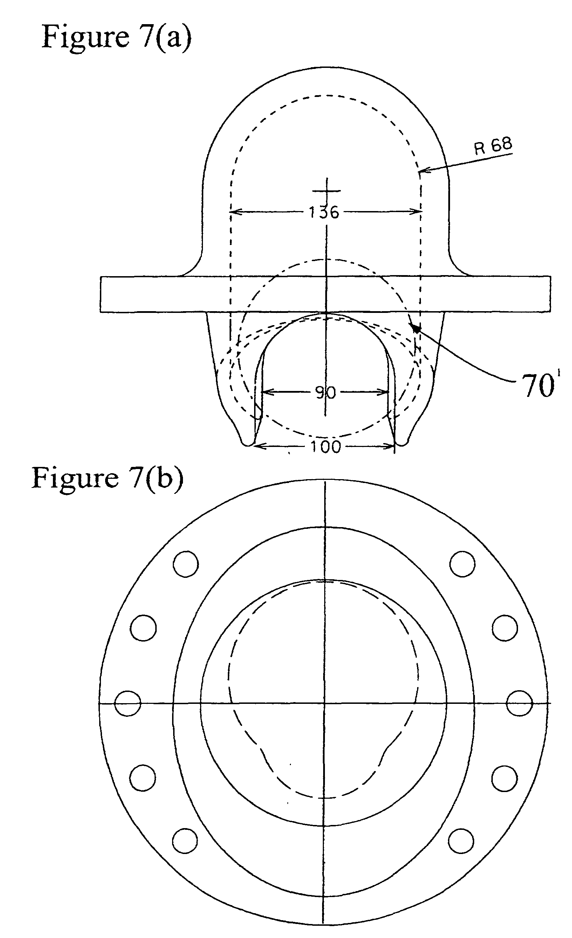

In a first mode, when the pressure at the outlet 34¹ is greater than at the inlet 32¹, i.e. during the downstroke of the associated pump, the ball occupies a first position in the ball-confinement region 72¹ in which it sits on and seals against the valve seat 46¹, and thereby blocks fluid flow between the outlet and inlet. Figure 7(a) shows the ball in this position.

In a second mode, when the pressure at the outlet 34¹ is less than at the inlet 32¹, i.e. during the upstroke of the associated pump, the ball occupies a second position in which it rolls or spins up the ball guide 56¹ into the volume enclosed by the dome portion 52¹ and permits fluid to flow between the inlet 32¹ and outlet 34¹. As the pump starts its downstroke again, the ball 70¹ tends to return to the valve seat by rolling or spinning down the ball guide 56¹.

The tendency for the ball 70¹ to return to the valve seat 46¹ via the ball guide 56¹ reduces the likelihood of the ball bouncing on the wall 36¹, the annular plate 47¹ or the valve seat 46¹ and so reduces the wear on the ball 70¹. The tendency for the ball to roll or spin ensures that the ball wears evenly and also assists the ball's return-passage from the volume enclosed by the dome portion 52¹ through the fluid being pumped to the valve seat 46¹. It will be noted that the region adjacent the bottom end of the dome 50¹ is slightly oval i.e. 145 mm from front to back, see Figure 1 and 136 mm across, see Figure 7(a). This shaping also assists in imparting spin onto the ball and in returning the ball through the fluid to the valve seat 46¹, when the ball does not return to the valve seat 46¹ via the ball guide 56¹.

As will be appreciated from the foregoing, if the ball valve 10¹ becomes blocked or requires a replacement valve seat 46¹, it is simply necessary to remove the dome 50¹, perform the unblocking or replacement operation via the access afforded by the aperture 26¹, and replace the dome 50¹. All this can be achieved without the need to disconnect the inlet and outlet of the ball valve from the other elements of the sewage handling circuit i.e. whilst keeping the main body portion 16¹ in-line.

It is a noteworthy feature of the present invention that the construction of the hall valve 10¹ is such that the inlet 32¹ and outlet 34¹ are in line-of-sight relation to each other, meaning that when the ball 70¹ is removed or in its second position, if one were to look in the inlet 32¹, one would be able to see out of the outlet 34¹. This feature together with angling of the valve seat 46¹ to the longitudinal axis of the main body portion 16¹ permits the direct flow of fluid through the valve 10¹; lessens the likelihood of blockages occurring; discourages the formation of vortexes in the fluid and minimises friction losses.

Although the present invention has been described with heavy emphasis on a ball valve suitable for use in sewage handling, the principles of the present invention can be applied to other fields where it might be desirable to provide a ball valve which can be maintained whilst keeping it in-line.

## Claims

1. A ball valve (10¹) comprising:
a first body portion (16¹) having an inlet (32¹), an outlet (34¹) and an aperture (26¹);
a second body portion (50¹) closing off the aperture (26¹) of the first body portion (16¹), said second body portion (50¹) being detachable from the first body portion (16¹), the first and second body portions together defining a chamber;
a valve seat (46¹) in the first body portion (16¹) dividing the chamber into inlet (62¹) and outlet (64¹) regions;
a ball guide (56¹) disposed in the outlet (64¹) region;
a ball (70¹) movable between a first position in which it sits on the valve seat (46¹) and blocks fluid flow between the outlet (34¹) and the inlet (32¹), and a second position in which the ball abuts against the ball guide (56¹) and fluid can flow between the inlet (32¹) and the outlet (34¹),
**characterised in that**:
the ball guide (56¹) forms an integral part of the second body portion (50¹);
and **in that**
due to the size of the aperture (26¹) and the integral configuration of the ball guide (56¹) and the second body portion (50¹), on removal of the second body portion (50¹), immediate access is provided to the valve seat (46¹).

2. A ball valve (10¹) as in Claim 1, where the aperture (26¹) is sized to permit the removal and replacement of the valve seat (46¹).

3. A ball valve (10¹) as in Claim 1 or 2, wherein the inlet (32¹) and outlet (34¹) are disposed in line-of-sight relation to one another.

4. A ball valve (10¹) as in any preceding claim, wherein the ball guide (56¹) includes two spaced abutments (58¹) which project into the first body portion (16¹).

## Patentansprüche

1. Kugelventil (10'), das folgende Bestandteile umfaßt:
einen ersten Ventilkörperteil (16'), der einen Einlaß (32') und einen Auslaß (34') sowie eine Öffnung (26') umfaßt,
einen zweiten Ventilkörperteil (50'), der die Öffnung (26') des ersten Ventilkörperteils (16') verschließt, wobei der zweite Ventilkörperteil (50') vom ersten Ventilkörperteil (16') lösbar ist und der erste und der zweite Ventilkörperteil gemeinsam eine Kammer umschließen,
einen Ventilsitz (46') im ersten Ventilkörperteil (16'), der die Kammer in einen Einlaßbereich (62') und einen Auslaßbereich (64') unterteilt,
eine Kugelführung (56'), die im Auslaßbereich (64') angeordnet ist,
eine Kugel (70'), die zwischen einer ersten Stellung, in der sie auf dem Ventilsitz (46') sitzt und einen Fluidstrom zwischen dem Auslaß (34') und dem Einlaß (32') blockiert, und einer zweiten Stellung bewegbar ist, in der die Kugel an der Ballführung (56') anliegt und ein Fluid zwischen dem Einlaß (32') und dem Auslaß (34') strömen kann,
**dadurch gekennzeichnet, daß**
die Kugelführung (56') einen integralen Teil des zweiten Ventilkörperteils (50') bildet, und
daß aufgrund der Größe der Öffnung (26') und der integralen Ausbildung der Kugelführung (56') und des zweiten Ventilkörperteils (50') bei einem Abnehmen des zweiten Ventilkörperteils (50') ein unmittelbarer Zugang zum Ventilsitz (46') geschaffen ist.

2. Kugelventil (10') nach Anspruch 1, bei dem die Öffnung (26') so bemessen ist, daß ein Entfernen und Austauschen des Ventilsitzes (46') ermöglicht ist.

3. Kugelventil (10') nach Anspruch 1 oder 2, bei dem der Einlaß (32') und der Auslaß (34') in einer Sichtlinienrelation zueinander angeordnet sind.

4. Kugelventil (10') nach einem der vorhergehenden Ansprüche, bei dem die Kugelführung (56') zwei im Abstand angeordnete Anschläge (58') umfaßt, die in den ersten Ventilkörperteil (16') hinein vorstehen.

## Revendications

1. Un robinet à boisseau sphérique (10¹) comprenant :
une première partie de corps (16¹) comprenant une entrée (32¹), une sortie (34¹) et une ouverture (26¹) ;
une deuxième partie de corps (50¹) fermant l'ouverture (26¹) de la première partie de corps (16¹), ladite deuxième partie de corps (50¹) étant détachable de la première partie de corps (16¹), les première et deuxième parties de corps définissant conjointement une chambre ;
un siège de robinet (46¹) dans la première partie de corps (16¹) divisant la chambre en des zones d'entrée (62¹) et de sortie (64¹) ;
un guide de boisseau sphérique (56¹) disposé dans la zone de sortie (64¹) ;
un boisseau sphérique (70¹) déplaçable entre une première position dans laquelle il siège sur le siège de robinet (46¹) et bloque l'écoulement de fluide entre la sortie (34¹) et l'entrée (32¹), et une deuxième position dans laquelle le boisseau sphérique vient buter contre le guide de boisseau sphérique (56¹) et dans laquelle du fluide peut s'écouler entre l'entrée (32¹) et la sortie (34¹),
**caractérisé en ce que** :
le guide de boisseau sphérique (56¹) fait partie intégrante de la deuxième partie de corps (50¹) ;
et **en ce que**
du fait de la taille de l'ouverture (26¹) et de la configuration monolithique du guide de boisseau sphérique (56¹) et de la deuxième partie de corps (50¹), un accès immédiat est offert au siège de robinet (46¹) lors de l'enlèvement de la deuxième partie de corps (50¹).

2. Un robinet à boisseau sphérique (10¹) selon la revendication 1, dans lequel l'ouverture (26¹) est dimensionnée pour permettre l'enlèvement et le remplacement du siège de robinet (46¹).

3. Un robinet à boisseau sphérique (10¹) selon la revendication 1 ou 2, dans lequel l'entrée (32¹) et la sortie (34¹) sont disposées en une relation de portée visuelle l'un par rapport à l'autre.

4. Un robinet à boisseau sphérique (10¹) selon l'une quelconque des revendications précédentes, dans lequel le guide de boisseau sphérique (56¹) comprend deux butées (58¹) espacées, faisant saillie dans la première partie de corps (16¹).
